# EUROPÄISCHE PATENTSCHRIFT

(11) **EP 0 558 886 B1**
(45) Veröffentlichungstag und Bekanntmachung des Hinweises auf die Patenterteilung: **14.08.1996**
(21) Anmeldenummer: 93100191.1
(22) Anmeldetag: 08.01.1993
(51) Int. Cl.: B65D 25/14, C08J 7/04, C09D 175/02

(54) **Kunststoffhohlkörper mit herabgesetzter Durchlässigkeit**
Plastic hollow object with reduced permeability
Corps creux en matière plastique ayant pénétration réduite

(30) Priorität: 04.03.1992 DE 4206747
(43) Veröffentlichungstag der Anmeldung: 08.09.1993
(73) Patentinhaber: Vestolen GmbH, D-45896 Gelsenkirchen (DE); CARL DIEDERICHS & CO. GmbH, D-40225 Düsseldorf (DE); BAYER AG, 51368 Leverkusen (DE)
(72) Erfinder: Gerdes, Ernst, W-4270 Dorsten 11 (DE); Hardegen, Johann-Heinrich, W-4358 Haltern 6 (DE); Gewecke, Peter, W-4358 Haltern (DE)
(74) Vertreter: Berg, Dirk, Dr.

(56) Entgegenhaltungen:
- EP-A- 0 085 309
- EP-A- 0 551 819
- DE-A- 3 447 022
- DATABASE WPIL Derwent Publications Ltd., London, GB; AN 82-27243E
- DATABASE WPIL Derwent Publications Ltd., London, GB; AN 81-61070D

## Beschreibung

Gegenstand der vorliegenden Erfindung sind plasmabehandelte und innenlackierte Kunststoffhohlkörper aus einem Polyolefin, die gegenüber dem Füllgut, wie beispielsweise Kraftstoffen, kohlenwasserstoffhaltigen Haushalts- oder Landwirtschaftschemikalien oder Reinigungslösemitteln, eine stark verringerte Durchlässigkeit aufweisen.

Kraftstoffbehälter wie Kanister und insbesondere im Fahrzeug eingebaute Tanks werden in zunehmendem Maße aus Polyethylen gefertigt. Gründe für die Substitution von Tanks aus Stahlblech durch solche aus Polyethylen sind Gewichtsersparnis, Korrosionsbeständigkeit, höhere Gestaltungsfreiheit, Sicherheit und Wirtschaftlichkeit.

Nachteilig ist, daß Kunststoffe, wie auch die hier verwendeten Polyolefine, eine gewisse Durchlässigkeit für Kraftstoffe aufweisen.

Es gibt mehrere Verfahren, um die Diffusion aus Kunststoffhohlkörpern zu behindern. Ein Beispiel ist das Einsetzen von Laminatstrukturen aus Polyamid in die Polyolefinmatrix. Damit können die Prüfanforderungen, die an einen Kraftstoffbehälter gestellt werden, jedoch bisher nicht erfüllt werden. Bei großvolumigen blasgeformten Hohlkörpern haben sich Verfahren durchgesetzt, bei denen die Kunststoffoberflächen chemisch verändert werden, speziell das Fluorieren und das Sulfonieren. Bei diesen Verfahren werden die Oberflächen mit Fluor bzw. Schwefeltrioxid behandelt, womit man eine stark reduzierte Permeation organischer Flüssigkeiten erreicht. Es muß allerdings ein hoher sicherheitstechnischer Aufwand in Kauf genommen werden, da man bei beiden Verfahren mit ätzenden Gasen arbeitet. Weitere hohe Kosten verursacht die Entsorgung der entstandenen Nebenprodukte.

In den DE-A-34 35 992 und DE-A-34 47 022 wird die Außenlackierung von Kunststoff-Kraftstoffbehältern mit mehrkomponentigen, lösemittelhaltigen Lacksystemen auf Basis von Polyurethan- bzw. Epoxidharzen beschrieben, wobei eine Vorbehandlung der Behälteroberfläche durch chemische Methoden, z. B. Eintauchen in Chromschwefelsäure, Beflämmen oder Corona-Entladung, benötigt wird, um die Haftung der Lackschicht zu gewährleisten. Neben der Verwendung von Lösemitteln und der Beschädigungsmöglichkeit durch äußere Einflüsse, wie z. B. Steinschlag, besteht ein wesentlicher Nachteil einer Außenseitenbeschichtung allerdings darin, daß bei Füllung der Kraftstoff, dessen Diffusion verhindert werden soll, durch das Grundmaterial bis zur Grenzschicht zwischen Hohlkörper und Beschichtung hindurchdiffundiert, was haftungsmindernde Auswirkungen und sogar ein Ablösen der Beschichtung zur Folge haben kann. Derartige Systeme haben sich daher in der Praxis nicht durchgesetzt.

Ein weiteres Verfahren zum Aufbringen einer Sperrschicht ist die Beschichtung durch Plasmapolymerisation von organischen Monomeren. Hier muß eine Vielzahl von Prozeßparametern optimiert werden, um gute Ergebnisse zu erhalten. Da die aufgebrachte Schicht sehr dünn und, wie elektronenmikroskopische Aufnahmen zeigen, stark zerklüftet ist, ist es gerade in einer Serienproduktion schwierig, eine einheitliche Qualität sicherzustellen. Daher ist dieses Verfahren bisher ohne Praxisnachweis.

**JP-A-57034950** beschreibt Polyolefinbehälter mit Sperrwirkung für organische Flüssigkeiten. Das Herstellungsverfahren umfaßt eine Oberflächenbehandlung der Behälter, z. B. durch ein Plasma, das Auftragen von aktiven Isocyanat-Verbindungen, z. B. auf Basis Hexamethylendiisocyanat, und anschließende Beschichtung mit einer lichthärtenden Zusammensetzung.

**DE-A-3447002** beschreibt Kraftstoffbehälter aus Polyethylen, die 60 - 80 % Sperrwirkung gegenüber Otto- und Dieselkraftstoffen aufweisen. Nach einer Vorbehandlung, z. B. Niederdruck-Glimmenladung wird ein 3-Komponenten-Lack aufgetragen, der ein Epoxidharz, einen Härter auf Amin-Basis und Isocyanatpräpolymere enthält.

Aus **EP-A-0551819** sind Polyolefin-Kraftstoffbehälter bekannt, deren Innenfläche nach Vorbehandlung, bevorzugt durch Plasma-Bestrahlung, mit einem feuchtigkeitshärtenden Ein-Komponenten-Lack auf Polyisocyanat-Basis beschichtet werden, um eine Permeation der flüssigen Treibstoffe nach außen zu unterbinden.

Die Aufgabe, die Durchlässigkeit der Polyolefinkraftstoffbehälter zu verringern, kann daher noch nicht als praxisgerecht gelöst angesehen werden.

In der vorliegenden Erfindung wird die Aufgabe gelöst durch ein Verfahren zur Herstellung eines Kunststoffhohlkörpers gemäß Anspruch 1 bzw. durch einen nach diesem Verfahren hergestellten Kunststoffhohlkörper.

Die Innenbeschichtung von Benzintanks nach vorhergehender Plasmabehandlung ist im Prinzip bekannt. So wird in der JP-A-56/81 344 mit der Lösung eines Epoxidharzes und -härters lackiert. Nachteilig ist hier nicht nur die Entfernung und Entsorgung des Lösemittels, sondern auch die Notwendigkeit eines Härtungsschritts. Die begrenzte Topfzeit solcher Zweikomponentensysteme, d. h. die Zeit, die nach dem Mischen für die Verarbeitung verbleibt, wirft zusätzliche Probleme auf.

In der JP-A-62/247 869 sowie der JP-A-61/164 947 wird ein im Plasma vorbehandelter Tank mit der Lösung eines Polyamids beschichtet. Auch dieser Weg führt nicht weiter, da auch hier das Lösemittel entfernt und entsorgt werden muß und im zweiten Fall das Polyamid, das einen Härter enthält, bei 140 - 160 °C eingebrannt werden muß, was wiederum starke Verzugsprobleme schafft. Auch ist die Sperrwirkung besonders gegenüber alkoholhaltigen Kraftstoffen bei weitem noch nicht ausreichend.

Schließlich wird in der JP-A-57/34 950 die Beschichtung einer Behälterwandung aus Polyolefin beschrieben, die zunächst durch Beflammen, Coronaentladung, durch einen Plasmastrahl oder durch Anätzen mit Chromschwefelsäure aktiviert wird, danach mit einer Verbindung behandelt wird, die zwei oder mehr Isocyanatgruppen pro Molekül enthält, und schließlich mit einer lichthärtenden Zusammensetzung beschichtet wird, die somit über das Di- oder Polyisocyanat an die Oberfläche gekoppelt wird. Mit diesem aufwendigen Verfahren können offensichtlich nur Außenflächen wirksam beschichtet werden.

Die vorliegende Erfindung basiert darauf, daß überraschend gute Sperrwirkungen bei der Innenbeschichtung eines plasmabehandelten Kunststoffhohlkörpers aus einem Polyethylen mit einem feuchtigkeitshärtenden Einkomponentenlack erhalten werden, der auf Diisocyanaten basiert. Dieser Lack setzt sich z. B. mit Luftfeuchte in bekannter Weise unter Abspaltung von Kohlendioxid zu einem hochschmelzenden, kraftstoffbeständigen Polymeren um, das in der Hauptsache über Harnstoffgruppen verknüpft ist.

Das Polyethylen kann unvernetzt oder auch vernetzt sein Im allgemeinen verwendet man PE-HD mit einer Dichte von 0,935 bis 0,950 g/cm³ und einem Schmelzindex (190/21,6) nach ISO 1191 von weniger als 10 g/10 min. Bevorzugt wird ein PE-HD mit einer Dichte von 0,940 bis 0,945 g/cm³ und einem Schmelzindex (190/21,6) von 1 bis 7 g/10 min eingesetzt.

Das Polyolefin enthält üblicherweise gängige Verarbeitungshilfsmittel, Stabilisatoren, Füllstoffe, Pigmente und/oder Ruß in den bei der Herstellung von Hohlkörpern gebräuchlichen Mengen.

Für die Aktivierung der Innenfläche des Hohlkörpers wird vorteilhaft ein Niederdruckplasma verwendet. Im Niederdruckplasma wird die Gasatmosphäre in einer Vakuumkammer durch ein elektrisches oder elektromagnetisches Wechselfeld in den üblichen freigegebenen Industriefrequenzen angeregt. Zusätzlich führt die Wechselwirkung der so angeregten Gasmoleküle untereinander zur Ausbildung einer Vielzahl weiterer chemisch extrem aktiver Teilchen, wie Radikalen, einfach oder mehrfach positiv oder auch negativ geladenen Gasionen und metastabilen Anregungszuständen. Der verfahrenstechnische Vorteil von Niederdruckplasmen im Vergleich zu solchen bei Normaldruck liegt im Ungleichgewicht zwischen der extrem hohen Elektronentemperatur und damit einer hohen chemischen Reaktivität und der relativ dazu niedrigen Gastemperatur. Daher wird bevorzugt bei einem Gasdruck von 0,1 bis 100 mbar, besonders bevorzugt bei einem Gasdruck von 0,2 bis 10 mbar und ganz besonders bevorzugt bei einem Gasdruck von 0,2 bis 0,5 mbar gearbeitet. Als Prozeßgas kommen beispielsweise Sauerstoff, mit Sauerstoff angereicherte Luft, Luft sowie Edelgase in Frage. Die Verwendung von Sauerstoff, Argon und/oder Helium ist bevorzugt.

Beim Einsatz von Plasmen im Frequenzbereich von kHz bis MHz, die fast immer einen Einsatz von Elektroden bedingen, können bei komplexer geformten Teilen Komplikationen auftreten. Die Elektroden müssen in ihrer Gestaltung dem Formteil angepaßt sein; zumindest eine Elektrode muß in den Hohlkörper eingeführt werden. Hierzu müssen entsprechend große Öffnungen vorgesehen werden.

Der Einsatz von Mikrowellen zur Anregung des Plasmas bietet demgegenüber den Vorteil einer elektrodenlosen Arbeitsweise. Mikrowellenplasmen können ohne spezielle Anpassungen auch zur Beschichtung komplizierter Geometrien eingesetzt werden. Die zu beschichtenden Teile benötigen nur eine kleine Öffnung zur Einführung des Prozeßgases.

Die erfindungsgemäße Innenbeschichtung besteht aus einem feuchtigkeitshärtenden Einkomponentenlack, der auf einem Diisocyanat, beispielsweise Hexamethylen-1,6-diisocanat, Isophorondiisocyanat oder dem Isomerengemisch von 2,4- und 2,6-Toluoldiisocyanat basiert.

Gegebenenfalls können, um eine gewisse Vernetzungsdichte und damit eine noch weiter verbesserte Sperrwirkung zu erzielen, in geringen Mengen höher funktionelle Isocyanate wie beispielsweise trimeres Isophorondiisocyanat oder trimeres Hexamethylendiisocyanat mitverwendet werden.

Das Eigenschaftsbild des Lackfilms kann durch Füllstoffe wie z. B. Talkum, Glimmer, Kreide, TiO₂, BaSO₄, Aluminiumpulver, Ruß, Graphit oder anorganische Pigmente modifiziert werden. Insbesondere durch Füllstoffe in Plättchenform wird die Sperrwirkung gegen Kraftstoffe und die Kraftstoffbeständigkeit zusätzlich erhöht. Derartige Handelsprodukte sind allgemein zugänglich.

Die Viskosität des Lackfilms kann durch Einsatz von Verlaufmitteln (z. B. Baysilon®-Öl) und durch Verdickungsmittel (z. B. Bentone oder Kieselsäure) unterschiedlich eingestellt werden. Dadurch wird es möglich, geometrisch kompliziert gestaltete Kunststoffhohlkörper innenseitig ganzflächig sicher zu beschichten. Vorzugsweise sollte die Schichtdicke des Lackfilms zwischen ca. 10 µm und ca. 90 µm liegen, besonders bevorzugt zwischen ca. 30 µm und ca. 60 µm.

Das Beschichten kann vorzugsweise durch Taumeln, Fluten, Spritzen oder Vernebeln erfolgen.

Ein Vorteil im Hinblick auf Umweltgesichtspunkte ist hierbei, daß das Beschichtungssystem lösemittelfrei verwendet werden kann.

Die Härtung des Lackfilms ist von der Luftfeuchte und der Temperatur abhängig. Bei 20 °C und 65 % relativer Luftfeuchte wird die Beschichtung nach ca. 3 Stunden griffest. Die Endhärte wird nach ca. 4 Tagen erreicht. Durch höhere Luftfeuchte, höhere Temperatur oder Einsatz eines Beschleunigers (z. B. 0,02 % Dibutylzinndilaurat oder 0,2 % Zinkoctoat) kann die Härtezeit verkürzt werden.

Durch die Innenbeschichtung erreicht man ohne weiteres eine Sperrwirkung gegen Kraftstoffe von mehr als 90 %.

Das folgende Beispiel soll die Erfindung näher erläutern.

### Beispiel:

Ein Kraftstoffbehälter (70 l Inhalt) aus PE-HD der Dichte 0,944 g/cm³ mit einem Schmelzindex 190/21,6 von 5 g/10 min und einem Rußgehalt von 0,1 Gew.-% wird zunächst einer Plasmabehandlung ausgesetzt.

Das Plasmasystem besteht aus drei Komponenten. Die Hauptkomponente ist die Reaktoreinheit, die aus einer liegenden trommelförmigen Kammer besteht, welche mit einer Hochfrequenzelektrode, einer Anschlußstelle für die Vakuumpumpe sowie einer Tür ausgerüstet ist. Die zweite Komponente ist der Hochfrequenz-Generator, der die Anregungsenergie liefert, um das unter Niederdruck stehende Prozeßgas in den Plasmazustand zu versetzen. Eine Vakuumpumpe als dritte Komponente hat die Funktion, den zur Plasmagenerierung erforderlichen Unterdruck in der Reaktionskammer herzustellen und aufrechtzuerhalten.

Der Kraftstoffbehälter wird in der Reaktionskammer plaziert, die Tür geschlossen und die Luft aus der Kammer evakuiert. Sobald der Druck 0,35 mbar beträgt, werden 250 cm³ Sauerstoff pro Minute in die Kammer geleitet und dieses Gas mit dem Hochfrequenzgenerator bei einer Frequenz von 13,56 MHz und mit einer Leistung von 4000 Watt in den Plasmazustand versetzt. Nach einer Wirkzeit von 8 Minuten wird die Hochfrequenzenergie abgeschaltet, der Zustrom von Sauerstoff unterbrochen und der Inhalt der Reaktionskammer auf Atmosphärendruck gebracht.

Nach Entnehmen des Behälters wird auf der Innenseite ein feuchtigkeitshärtender Einkomponentenlack (Einkomponenten-Beschichtungssystem 2000 der Firma Diederichs Lackchemie, D-4000 Düsseldorf) durch Taumeln des Behälters aufgetragen, anschließend überschüssiger Lack mit einer druckluftbetriebenen Saugpumpe entfernt und die Beschichtung 4 Stunden bei Raumtemperatur an der Luft gehärtet.

Anschließend wird die Kraftstoffdurchlässigkeit des lackierten Kraftstoffbehälters im Vergleich zu einem nicht plasmabehandelten und unlackierten, aber ansonsten identischen Behälter bei 40 °C anhand der Prüfmethode ECE-34 gemessen.

Gegenüber dem bleifreien SVK-Testkraftstoff CEC-RF-08-A85 wird hierbei während einer Gesamtprüfzeit von 350 Tagen eine Sperrate von 90,5 - 91 % erzielt.

Die Sperrate gegenüber einem bleifreien SVK von Tankstellenqualität beträgt während einer Gesamtprüfzeit von 350 Tagen 95 - 96 %.

## Patentansprüche (Patentansprüche für folgende(n) Vertragsstaat(en): BE, DE, ES, FR, GB, IT, NL, SE)

1. Verfahren zur Herstellung eines Kunststoffhohlkörpers aus einem Polyethylen mit einer gegenüber dem Füllgut herabgesetzten Durchlässigkeit, bei dem die Innenfläche des Hohlkörpers mit einem Plasma vorbehandelt wird, dadurch gekennzeichnet, daß anschließend auf die so vorbehandelte Innenfläche ein feuchtigkeitshärtender Einkomponentenlack aufgetragen wird, der auf einem Diisocyanat basiert und das Polyethylen ein PE-HD mit einer Dichte von 0,935 bis 0,950 g/cm³ und einem Schmelzindex (190/21,6) von weniger als 10 g/10 min ist.

2. Verfahren gemäß Anspruch 1, dadurch gekennzeichnet, daß das Polyethylen ein PE-HD mit einer Dichte von 0,940 bis 0,945 g/cm³ und einem Schmelzindex (190/21,6) von 1 bis 7 g/10 min. ist.

3. Verfahren gemäß Anspruch 1 oder 2, dadurch gekennzeichnet, daß man bei der Plasmavorbehandlung bei einem Gasdruck von 0,1 bis 100 mbar arbeitet.

4. Verfahren gemäß Anspruch 3, dadurch gekennzeichnet, daß man bei einem Gasdruck von 0,2 bis 0,5 mbar arbeitet.

5. Verfahren gemäß einem der vorhergehenden Ansprüche, dadurch gekennzeichnet, daß man bei der Plasmavorbehandlung als Prozeßgas Sauerstoff, mit Sauerstoff angereicherte Luft, Luft und/oder Edelgase, insbesondere Sauerstoff, Argon und/oder Helium verwendet.

6. Verfahren nach einem der vorhergehenden Ansprüche, dadurch gekennzeichnet, daß als Diisocyanat Hexamethylen-1,6-diisocyanat, Isophorondiisocyanat oder ein Isomerengemisch von 2,4- und 2,6-Toluoldiisocyanat eingesetzt wird.

7. Verfahren gemäß einem der vorhergehenden Ansprüche, dadurch gekennzeichnet, daß der Lack Füllstoffe, vorzugsweise in Plättchenform, Verlaufmittel und/oder Verdickungsmittel enthält.

8. Kunststoffhohlkörper aus PE-HD mit einer Dichte von 0,935 bis 0,950 g/cm³ und einem Schmelzindex (190/21,6) von weniger als 10 g/10 min, hergestellt gemäß einem der vorhergehenden Ansprüche.

9. Kunststoffhohlkörper gemäß Anspruch 8, dadurch gekennzeichnet, daß die Schichtdicke des Lackfilms zwischen 10 µm und 90 µm liegt.

10. Kunststoffhohlkörper gemäß Anspruch 8 oder Anspruch 9 in Form eines Kraftstoffkanisters oder Kraftstofftanks.

## Patentansprüche (Patentansprüche für folgende(n) Vertragsstaat(en): PT)

1. Verfahren zur Herstellung eines Kunststoffhohlkörpers aus einem Polyethylen mit einer gegenüber dem Füllgut herabgesetzten Durchlässigkeit, bei dem die Innenfläche des Hohlkörpers mit einem Plasma vorbehandelt wird, dadurch gekennzeichnet, daß anschließend auf die so vorbehandelte Innenfläche ein feuchtigkeitshärtender Einkomponentenlack aufgetragen wird, der auf einem Diisocyanat basiert.

2. Verfahren gemäß Anspruch 1, dadurch gekennzeichnet, daß das Polyethylen ein PE-HD mit einer Dichte von 0,935 bis 0,950 g/cm³ und einem Schmelzindex (190/21,6) von weniger als 10 g/10 min ist.

3. Verfahren gemäß Anspruch 1 oder 2, dadurch gekennzeichnet, daß man bei der Plasmavorbehandlung bei einem Gasdruck von 0,1 bis 100 mbar arbeitet.

4. Verfahren gemäß Anspruch 3, dadurch gekennzeichnet, daß man bei einem Gasdruck von 0,2 bis 0,5 mbar arbeitet.

5. Verfahren gemäß einem der vorhergehenden Ansprüche, dadurch gekennzeichnet, daß man bei der Plasmavorbehandlung als Prozeßgas Sauerstoff, mit Sauerstoff angereicherte Luft, Luft und/oder Edelgase, insbesondere Sauerstoff, Argon und/oder Helium verwendet.

6. Verfahren nach einem der vorhergehenden Ansprüche, dadurch gekennzeichnet, daß als Diisocyanat Hexamethylen-1,6-diisocyanat, Isophorondiisocyanat oder ein Isomerengemisch von 2,4- und 2,6-Toluoldiisocyanat eingesetzt wird.

7. Verfahren gemäß einem der vorhergehenden Ansprüche, dadurch gekennzeichnet, daß der Lack Füllstoffe, vorzugsweise in Plättchenform, Verlaufmittel und/oder Verdickungsmittel enthält.

8. Kunststoffhohlkörper, hergestellt gemäß einem der vorhergehenden Ansprüche.

9. Kunststoffhohlkörper gemäß Anspruch 8, dadurch gekennzeichnet, daß die Schichtdicke des Lackfilms zwischen 10 µm und 90 µm liegt.

10. Kunststoffhohlkörper gemäß Anspruch 8 oder Anspruch 9 in Form eines Kraftstoffkanisters oder Kraftstofftanks.

## Claims (Claims for the following Contracting State(s): BE, DE, ES, FR, GB, IT, NL, SE)

1. Method for producing a polyethylene, plastic hollow body having a reduced permeability with respect to the contents, in which the internal surface of the hollow body is pretreated with a plasma, characterized in that a liquid-curing one-component paint which is based on a diisocyanate is applied to the internal surface pretreated in this way, and the polyethylene is a PE-HD having a density of 0.935 to 0.950 g/cm³ and a melt flow index (190/21.6) of less than 10 g/10 min.

2. Method according to Claim 1, characterized in that the polyethylene is a PE-HD having a density of 0.940 to 0.945 g/cm³ and a melt flow index (190/21.6) of 1 to 7 g/10 min.

3. Method according to Claim 1 or 2, characterized in that a gas pressure of 0.1 to 100 mbar is employed in the plasma pretreatment.

4. Method according to Claim 3, characterized in that a gas pressure of 0.2 to 0.5 mbar is employed.

5. Method according to one of the preceding claims, characterized in that oxygen, oxygen-enriched air, air and/or noble gases, in particular oxygen, argon and/or helium are/is used as processing gas in the plasma pretreatment.

6. Method according to one of the preceding claims, characterized in that hexamethylene 1,6-diisocyanate, isophorone diisocyanate or an isomeric mixture of toluene 2,4-diisocyanate and toluene 2,6-diisocyanate are used as diisocyanate.

7. Method according to one of the preceding claims, characterized in that the paint contains fillers, preferably in platelet form, levelling agents and/or thickening agents.

8. Plastic hollow body made of PE-HD having a density of 0.935 to 0.950 g/cm³ and a melt flow index (190/21.6) of less than 10 g/10 min, produced according to one of the preceding claims.

9. Plastic hollow body according to Claim 8, characterized in that the layer thickness of the paint film is between 10 µm and 90 µm.

10. Plastic hollow body according to Claim 8 or Claim 9 in the form of a fuel canister or fuel tank.

## Claims (Claims for the following Contracting State(s): PT)

1. Method for producing a polyethylene plastic hollow body having a reduced permeability with respect to the contents, in which the internal surface of the hollow body is pretreated with a plasma, characterized in that a liquid-curing one-component paint which is based on a diisocyanate is applied to the internal surface pretreated in this way.

2. Method according to Claim 1, characterized in that the polyethylene is a PE-HD having a density of 0.935 to 0.950 g/cm³ and a melt flow index (190/21.6) of less than 10 g/10 min.

3. Method according to Claim 1 or 2, characterized in that a gas pressure of 0.1 to 100 mbar is employed in the plasma pretreatment.

4. Method according to Claim 3, characterized in that a gas pressure of 0.2 to 0.5 mbar is employed.

5. Method according to one of the preceding claims, characterized in that oxygen, oxygen-enriched air, air and/or noble gases, in particular oxygen, argon and/or helium are/is used as processing gas in the plasma pretreatment.

6. Method according to one of the preceding claims, characterized in that hexamethylene 1,6-diisocyanate, isophorone diisocyanate or an isomeric mixture of toluene 2,4-diisocyanate and toluene 2,6-diisocyanate are used as diisocyanate.

7. Method according to one of the preceding claims, characterized in that the paint contains fillers, preferably in platelet form, levelling agents and/or thickening agents.

8. Plastic hollow body produced according to one of the preceding claims.

9. Plastic hollow body according to Claim 8, characterized in that the layer thickness of the paint film is between 10 µm and 90 µm.

10. Plastic hollow body according to Claim 8 or Claim 9 in the form of a fuel canister or fuel tank.

## Revendications (Revendications pour l'(les) Etat(s) contractant(s) suivant(s): BE, DE, ES, FR, GB, IT, NL, SE)

1. Procédé de production d'un corps creux de matière plastique en polyéthylène ayant une perméabilité diminuée vis-à-vis du contenu, dans lequel on traite la surface interne du corps creux avec un plasma, caractérisé en ce qu'on dépose ensuite à la surface interne ainsi traitée un vernis monocomposant durcissant à l'humidité, qui est à base d'un diisocyanate et le polyéthylène est un PE-HD de densité 0,935 à 0,950 g/cm₃ et d'indice de fusion (190/21,6) inférieur à 10 g/10 min.

2. Procédé selon la revendication 1, caractérisé en ce que le polyéthylène est un PE-HD de densité 0,940 à 0,945 g/cm₃ et d'indice de fusion (190/21,6) de 1 à 7 g/10 min.

3. Procédé selon la revendication 1 ou 2, caractérisé en ce qu'on travaille lors du prétraitement au plasma avec une pression de gaz de 0,1 à 100 mbar.

4. Procédé selon la revendication 3, caractérisé en ce qu'on travaille avec une pression de gaz de 0,2 à 0,5 mbar.

5. Procédé selon l'une des revendications précédentes, caractérisé en ce que lors du prétraitement au plasma, on utilise comme gaz de procédé de l'oxygène, de l'air enrichi en oxygène, de l'air et/ou des gaz rares, notamment de l'oxygène, de l'argon et/ou de l'hélium.

6. Procédé selon l'une des revendications précédentes, caractérisé en ce qu'on utilise comme diisocyanate l'hexaméthylène-1,6-diisocyanate, l'isophorone diisocyanate ou un mélange d'isomères de 2,4- et 2,6-toluènediisocyanate.

7. Procédé selon l'une des revendications précédentes, caractérisé en ce que le vernis contient des charges, de préférence sous forme de plaquettes, des agents d'écoulement et/ou des épaississants.

8. Corps creux en matière plastique produit selon l'une des revendications précédentes en PE-HD de densité 0,935 à 0,950 g/cm₃ et d'indice de fusion (190/21,6) inférieur à 10 g/10 min.

9. Corps creux en matière plastique selon la revendication 8, caractérisé en ce que l'épaisseur du film de vernis est comprise entre 10 µm et 90 µm.

10. Corps creux en matière plastique selon la revendication 8 ou la revendication 9 sous forme d'un bidon d'essence ou d'un réservoir d'essence.

## Revendications (Revendications pour l'(les) Etat(s) contractant(s) suivant(s): PT)

1. Procédé de production d'un corps creux de matière plastique en polyéthylène ayant une perméabilité diminuée vis-à-vis du contenu, dans lequel on traite la surface interne du corps creux avec un plasma, caractérisé en ce qu'on dépose ensuite à la surface interne ainsi traitée un vernis monocomposant durcissant à l'humidité qui est à base d'un diisocyanate.

2. Procédé selon la revendication 1, caractérisé en ce que le polyéthylène est un PE-HD de densité 0,935 à 0,950 g/cm₃ et d'indice de fusion (190/21,6) inférieur à 10 g/10 min.

3. Procédé selon la revendication 1 ou 2, caractérisé en ce qu'on travaille lors du prétraitement au plasma avec une pression de gaz de 0,1 à 100 mbar.

4. Procédé selon la revendication 3, caractérisé en ce qu'on travaille avec une pression de gaz de 0,2 à 0,5 mbar.

5. Procédé selon l'une des revendications précédentes, caractérisé en ce que lors du prétraitement au plasma, on utilise comme gaz de procédé de l'oxygène de l'air enrichi en oxygène, de l'air et/ou des gaz rares, notamment de l'oxygène, de l'argon et/ou de l'hélium.

6. Procédé selon l'une des revendications précédentes, caractérisé en ce qu'on utilise comme diisocyanate l'hexaméthylène-1,6-diisocyanate, l'isophorone diisocyanate ou un mélange d'isomères de 2,4- et 2,6-toluènediisocyanate.

7. Procédé selon l'une des revendications précédentes, caractérisé en ce que le vernis contient des charges de préférence sous forme de plaquettes, des agents d'écoulement et/ou des épaississants.

8. Corps creux en matière plastique produit selon l'une des revendications précédentes.

9. Corps creux en matière plastique selon la revendication 8, caractérisé en ce que l'épaisseur du film de vernis est comprise entre 10 µm et 90 µm.

10. Corps creux en matière plastique selon la revendication 8 ou la revendication 9 sous forme d'un bidon d'essence ou d'un réservoir d'essence.
